# EUROPEAN PATENT SPECIFICATION

(11) **EP 4 619 238 B1**
(45) Date of publication and mention of the grant of the patent: **10.06.2026**
(21) Application number: 23801786.7
(22) Date of filing: 07.11.2023
(51) Int. Cl.: C21B 7/06, B32B 18/00, C04B 35/043, C04B 35/06, F27B 3/14, F27D 1/00, F27D 1/10

(54) **REFRACTORY LINING DISPOSED ON THE BOTTOM OF A METALLURGICAL UNIT FOR HOLDING A MOLTEN METAL, METHOD OF PROVIDING A REFRACTORY LINING DISPOSED ON THE BOTTOM OF A METALLURGICAL UNIT FOR HOLDING A MOLTEN METAL, AND METALLURGICAL UNIT FOR HOLDING A MOLTEN METAL**
FEUERFESTE AUSKLEIDUNG, DIE AUF DEM BODEN EINER METALLURGISCHEN EINHEIT ZUR AUFNAHME VON GESCHMOLZENEM METALL ANGEORDNET IST, UND VERFAHREN ZUM BEREITSTELLEN EINER SOLCHEN FEUERFESTEN AUSKLEIDUNG AUF DEM BODEN EINER METALLURGISCHEN EINHEIT ZUR AUFNAHME VON GESCHMOLZENEM METALL
REVÊTEMENT RÉFRACTAIRE DISPOSÉ AU FOND D'UNE UNITÉ MÉTALLURGIQUE POUR CONTENIR UN MÉTAL EN FUSION ET MÉTHODE DE FOURNITURE D'UN TEL REVÊTEMENT RÉFRACTAIRE DISPOSÉ AU FOND D'UNE UNITÉ MÉTALLURGIQUE POUR CONTENIR UN MÉTAL EN FUSION

(30) Priority: 15.11.2022 EP 22207593
(43) Date of publication of application: 24.09.2025
(73) Proprietor: Refractory Intellectual Property GmbH & Co. KG, 1100 Wien (AT)
(72) Inventor: LANZENBERGER, Ronald, 8700 Leoben (AT); WAPPEL, David, 8700 Leoben (AT); ZETTL, Karl-Michael, 1120 Vienna (AT); WUCHER, Johannes, 1120 Vienna (AT)
(74) Representative: Berkenbrink, Kai-Oliver
(86) International application number: PCT/EP2023/081047
(87) International publication number: WO 2024/104840

(56) References cited:
- "TYPICAL ELECTRIC ARC FURNACE LININGS", DIDIER INFORMATION, XX, XX, 1 April 1984 (1984-04-01), XP001202388

## Description

The invention refers to a refractory lining disposed on the bottom of a metallurgical unit for holding a molten metal, a method of providing a refractory lining disposed on the bottom of a metallurgical unit for holding a molten metal, and a metallurgical unit for holding a molten metal.

In particular, an electric arc furnace (EAF) is also known as such a metallurgical unit for holding a molten metal. Such an electric arc furnace is an industrial furnace in which an electric arc is generated, the heat radiation of which melts solid metal present in the furnace, thereby producing molten metal in the furnace and making it available in the furnace. Electric arc furnaces are nowadays used in particular for melting down and casting metals, including in particular the melting down and recycling of ferrous scrap. Electric arc furnaces regularly comprise a metal shell, the side walls of which at least partially can further be lined with refractory bricks. Nowadays, the bottom (also called "hearth") of modern electric arc furnaces is regularly lined with unshaped refractory materials, i.e., so-called refractory masses or mixes. In particular, the bottom of electric arc furnaces is nowadays lined with hearth masses.

The start-up procedure of a metallurgical unit for holding molten metal, in particular in the form of an electric arc furnace, depends in particular on the quality of the refractory lining disposed on the bottom of the metallurgical unit. Thus, it is necessary that the refractory lining disposed on the bottom sinters tightly to prevent the molten metal from passing through the refractory lining. This is important, because components of the molten metal passing through the refractory lining could damage parts of the electric arc furnace located under the refractory lining, such as a permanent lining or the metal shell of the electric arc furnace. In this respect, it is also particularly desired that the refractory lining disposed on the bottom sinters densely already during the start-up procedure at the lowest possible temperatures, in order to thereby prevent the molten metal from passing through the refractory lining disposed on the bottom. In this respect, it may be desirable to provide a refractory lining that is already sintered at low temperatures. At the same time, however, refractory linings with a low sintering temperature have in particular the disadvantage of a low refractoriness during operation. Although refractory linings with a low sintering temperature have the advantage of high resistance to slags and molten metals during the start-up procedure, they suffer from a low resistance to temperature changes and a short lining lifetime.

This dilemma, according to which the refractory lining should have the lowest possible sintering temperature on the one hand, but the highest possible refractoriness on the other, could not be satisfactorily solved in the prior art.

CN105622069A relates to a zirconium composite magnesium calcium iron ramming material and a preparation method thereof.

CN107602086A belongs to the field of environmental protection materials, and in particular relates to an environmentally friendly magnesium calcium plastic (ramming) material produced by using waste refractories and a manufacturing method thereof.

CN1758004A relates to a smelting furnace bottom material, in particular to a substrate material of a bottom electrode region of a direct current electric arc furnace and a production process thereof.

An object to be solved by the invention is to provide a refractory lining which can be disposed on the bottom of a metallurgical unit for holding a molten metal, whereby the refractory lining should exhibit good sintering properties at low temperatures and at the same time have good refractoriness. In particular, the refractory lining should sinter densely at low temperatures and at the same time exhibit good refractoriness, and further exhibit good resistance to slags and molten metals, good resistance to temperature changes and good lining lifetime.

To solve this object, according to the invention, there is provided a refractory lining, being configured to be disposed on the bottom of a metallurgical unit for holding a molten metal, the refractory lining comprising:
a first layer; and
a second layer; wherein
the first layer is configured to be disposed on the bottom of the metallurgical unit; wherein
the second layer is disposed on the first layer; wherein
the first layer and the second layer each have a chemical composition with MgO as the main oxide; wherein
the first layer has a chemical composition with a proportion of Fe₂O₃ of at most 2.8% by mass, based on the mass of the first layer; and wherein
the second layer has a chemical composition with a proportion of Fe₂O₃ of at least 3.2% by mass, based on the mass of the second layer.

Surprisingly, it has been found in the context of the invention that the above tasks can be solved by providing such a refractory lining.

A basic consideration of the invention is to provide a refractory lining comprising multiple layers. In particular, the refractory lining according to the invention comprises at least two layers, namely a first layer and a second layer. Another basic consideration of the invention is that at least two layers of the refractory lining according to the invention have different properties. According to the invention, the first layer and the second layer have different properties. Another basic consideration of the invention is to provide that the first layer and the second layer have different properties with respect to their sintering behaviour. In particular, it is envisaged that the second layer sinters at lower temperatures than the first layer. This creates the possibility of resolving the aforementioned dilemma. By sintering the second layer at low temperatures, a densely sintered layer of the refractory lining can be provided by the second layer even at low temperatures, protecting the underlying areas from the molten metal in the metallurgical unit. At the same time, the refractory properties of the first layer, which is located below the second layer, can be selected independently of the properties of the second layer. In this respect, the refractory properties of the first layer can be optimized independently of the refractory properties of the second layer. In particular, the refractory properties of the first layer can be optimized with respect to its resistance to metal slags and molten metals, with respect to its resistance to thermal shock, and with respect to its resistance to high temperatures.

In order to be able to impart good sintering behaviour to the second layer, it is provided according to the invention that the second layer has a relatively high proportion of Fe₂O₃. According to the invention, the second layer has a chemical composition with a proportion of Fe₂O₃ of at least 3.2 mass%, based on the mass of the second layer. According to the invention, it has been found that good sintering behaviour can be imparted to the second layer at such a minimum proportion of Fe₂O₃.

Insofar as the chemical composition is indicated herein, this is the chemical composition determined on the fired substance (at 1025 °C) according to ISO 12677:2011-10.

According to a preferred embodiment, the second layer has a chemical composition with a content of Fe₂O₃ in the range from 3.2 to 8.3% by mass, particularly preferably in the range from 3.2 to 6% by mass and even more preferably in the range from 3.2 to 4% by mass, in each case based on the mass of the second layer.

The second layer has a chemical composition with MgO as the main oxide. The chemical composition of the second layer is thus characterized by the fact that no other oxide with a higher mass fraction is present in the first layer than MgO. Preferably, the second layer has a chemical composition with a proportion of MgO above 50% by mass, based on the mass of the second layer. According to a preferred embodiment, the second layer has a chemical composition with a proportion of MgO in the range from 51 to 85% by mass, even more preferably in the range from 60 to 85% by mass, in each case based on the mass of the second layer.

According to the invention, it has been found that the proportion of further oxides in the second layer also has an influence on its sintering properties. In this respect, it can be provided that further oxides are also present in specific proportions in the second layer in order to be able to influence the sintering behaviour of the second layer.

According to a preferred embodiment, the second layer has a chemical composition with a proportion of CaO in the range from 15 to 46% by mass, preferably in the range from 15 to 35% by mass, in each case based on the mass of the second layer.

According to a preferred embodiment, the second layer has a chemical composition with a proportion of SiO₂ in the range from 0.4 to 2.2% by mass, preferably in the range from 0.4 to 1.5% by mass, in each case based on the mass of the second layer.

According to a preferred embodiment, the second layer has a chemical composition with a proportion of Al₂O₃ in the range from 0.1 to 1.0% by mass, based on the mass of the second layer.

According to one embodiment, it is provided that the second layer has a chemical composition with a proportion of the following oxides in the following ranges, each based on the mass of the second layer:

| | |
|---|---|
| Fe₂O₃: | 3.2 to 8.3% by mass; |
| CaO: | 15 to 46% by mass; |
| SiO₂: | 0.4 to 2.2% by mass; |
| Al₂O₃: | 0.1 to 1.0% by mass; |
| MgO: | remainder to 100% by mass. |

Preferably, one or more of the aforementioned oxides in the second layer may thereby be present in the aforementioned preferred ranges.

According to the invention, it has been found that in particular the mass ratio of the oxides CaO to SiO₂ (i.e., the "C/S ratio") in the second layer has a special influence on its wear behaviour. Preferably, in this respect, it may be provided that the mass ratio of CaO to SiO₂ in the second layer is in the range of 20 to 40, more preferably in the range of 22 to 34 and particularly preferably in the range of 24 to 32.

In accordance with the invention, it was found that a correspondingly high ratio of the mass fraction of CaO to SiO₂ in the second layer can, in particular, effectively prevent infiltration of a metal slag into and through the second layer and thus through the refractory lining according to the invention.

The proportion of Fe₂O₃ in the first layer is significantly lower than in the second layer. This makes it possible to achieve that the first layer has a particularly good refractoriness. According to the invention, it is provided that the first layer has a chemical composition with a proportion of Fe₂O₃ of at most 2.8% by mass, based on the mass of the first layer. According to a preferred embodiment, the first layer has a chemical composition with a proportion of Fe₂O₃ in the range from 0.2 to 2.8% by mass, even more preferably in the range from 1 to 2.8% by mass and particularly preferably in the range from 1 to 2.6% by mass, in each case based on the mass of the first layer.

As in the second layer, the chemical composition of the first layer is also characterized in that MgO is present as the main oxide, i.e., no other oxide is present in the first layer with a higher mass fraction than MgO.

According to a preferred embodiment, it is provided that the first layer has a chemical composition with a proportion of MgO above 50% by mass, based on the mass of the first layer. According to a preferred embodiment, the first layer has a chemical composition with a proportion of MgO in the range from 65 to 98.6% by mass, even more preferably in the range from 65 to 80% by mass, in each case based on the mass of the first layer.

According to a preferred embodiment, the first layer has a chemical composition with a proportion of CaO in the range from 0.9 to 30% by mass, preferably in the range from 10 to 30% by mass, in each case based on the mass of the first layer.

According to a preferred embodiment, the first layer has a chemical composition with a proportion of SiO₂ in the range from 0.2 to 1% by mass, preferably in the range from 0.4 to 1% by mass, in each case based on the mass of the first layer.

According to a preferred embodiment, the first layer has a chemical composition with a proportion of Al₂O₃ in the range from 0.05 to 0.4% by mass, preferably in the range from 0.05 to 0.2% by mass, in each case based on the mass of the first layer.

According to a preferred embodiment, it is provided that the first layer has a chemical composition with a proportion of the following oxides in the following ranges, each based on the mass of the first layer:

| | |
|---|---|
| Fe₂O₃: | 0.2 to 2.8% by mass; |
| CaO: | 0.9 to 30% by mass; |
| SiO₂: | 0.2 to 1.0% by mass; |
| Al₂O₃: | 0.05 to 0.4% by mass; |
| MgO: | remainder to 100% by mass. |

Preferably, one or more of the aforementioned oxides in the first layer may thereby be present in the aforementioned preferred ranges.

According to a preferred embodiment, the mass ratio of CaO to SiO₂ in the first layer is in the range from 4.5 to 50, particularly preferably in the range from 30 to 50.

Preferably, the second layer is arranged directly on the first layer. This means that there are no other layers or other components, for example other refractory materials or mortar, between the first layer and the second layer. In particular, this also has the advantage that the first layer and the second layer can be optimally matched to each other, so that the refractory lining according to the invention can be provided in an optimized manner both in terms of its sintering behaviour and its strength.

Preferably, no further layer is arranged on the second layer, i.e., on the side of the second layer facing away from the first layer. This has the particular advantage that the refractory lining according to the invention can exhibit optimum sintering behaviour on its upper side, which is made available by the second layer. To this extent, the second layer is preferably exposed towards the top, i.e., on the side of the second layer facing away from the first layer, so that this can be optimally sintered when the metallurgical unit is started up. When the refractory lining according to the invention is disposed on the bottom of the metallurgical unit, the second layer preferably faces the space of the metallurgical unit in which the molten metal is held during operation of the metallurgical unit, so that the second layer comes into direct contact with the molten metal during operation of the metallurgical unit. This allows the second layer to be rapidly sintered by the molten metal during start-up of the metallurgical unit, so that the second layer immediately forms a barrier against the penetration of molten metal through the refractory lining.

The first layer is arranged on the bottom of the metallurgical unit. This bottom of the metallurgical unit can be designed according to the prior art. Insofar as the metallurgical unit is designed in the form of an electric arc furnace, the bottom of the metallurgical unit can be designed according to the bottoms for electric arc furnaces known from the prior art. In this respect, the bottom may be, for example, the bottom-side section of the metal shell of an electric arc furnace, on which, for example, a permanent lining in the form of a lining of refractory bricks may also be arranged.

The first layer is preferably arranged directly on the bottom of the metallurgical unit. In particular, preferably no further layers or refractory components, such as mortar, are arranged between the first layer and the bottom.

According to a preferred embodiment, the refractory lining according to the invention has a thickness in the range from 400 to 1,200 mm, particularly preferably in the range from 600 to 800 mm. According to the invention, it was found that with a refractory lining according to the invention having such a thickness, the bottom of the metallurgical unit can be effectively protected from a molten metal and metal slag present in the metallurgical unit, as well as from thermal attack.

According to a preferred embodiment, it is provided that the second layer has a thickness in the range from 5 to 30 %, more preferably in the range from 10 to 15 % of the thickness of the refractory lining. According to the invention, it has been found that a second layer having such a thickness can effectively protect the underlying first layer as well as the bottom of the metallurgical unit from the molten metal and metal slag.

Preferably, the second layer has a thickness in the range from 60 to 120 mm. In accordance with the invention, it has been found that by providing a second layer having such a thickness, the first layer thereunder and the bottom of the metallurgical unit can be effectively protected from a molten metal and metal slag.

Preferably, the first layer and the second layer are each in the form of a mass, that is, an unshaped refractory material. Preferably, the first layer and the second layer, in particular also insofar as they are present as a mass, are not bound, in particular not bound by a binder, and are not sintered (before starting the metallurgical unit in which the first and second layer are used). A particular advantage of such first and second layers, which are each present as a mass, is that they are jointless, i.e., monolithic. In this respect, the first layer and the second layer are preferably each present as a monolithic layer. In this way, the passage of molten metal through the refractory lining can be prevented particularly effectively, and in particular much more effectively than would be possible with shaped refractory products, for example in the form of bricks.

Preferably, the first layer and the second layer are in the form of a dry mass, i.e., as an unshaped refractory material without portions of binder or water.

Particularly preferably, the first layer and the second layer are provided in the form of a hearth mass, in particular as a dry hearth mass.

In order to be able to provide the first layer and the second layer with the properties according to the invention, in particular the chemical composition according to the invention, in principle all refractory raw materials known from the prior art can be used. The skilled person is readily aware of raw materials on the basis of which a first layer and a second layer with the properties mentioned herein, in particular the chemical composition mentioned herein, can be provided.

Preferably, the first layer and the second layer comprise at least one of the following refractory raw materials: magnesia and doloma. Magnesia, i.e., a raw material based on magnesium oxide (MgO), may in particular be in the form of at least one of sintered magnesia or fused magnesia.

Doloma, i.e., a raw material based on the oxides magnesium oxide and calcium oxide (CaO), may be present in particular in the form of at least one of the raw materials sintered doloma or fused doloma.

According to an embodiment of the invention, it may preferably be provided that the raw materials of the first layer and second layer are present in a wide grain size distribution. According to one embodiment, it may be provided that the raw materials of the first layer and second layer are present in a grain size, wherein at least 90% by mass is present with a grain size below 8 mm, 56 to 85% by mass is present with a grain size below 3.15 mm, 42 to 56% by mass is present with a grain size below 1.0 mm, and 6 to 22% by mass is present with a grain size below 0.063 mm, based on the respective mass of the first layer and the second layer.

A further subject-matter of the invention is the provision of a refractory lining disposed on the bottom of a metallurgical unit for holding a molten metal, the method comprising the steps of:
providing a metallurgical unit for holding a molten metal comprising:
   a bottom;
providing a refractory lining, the refractory lining comprising:
   a first layer; and
   a second layer; wherein
   the first layer is adapted to be disposed on the bottom of the metallurgical unit; wherein
   the second layer is adapted to be disposed on the first layer; wherein
   the first layer and the second layer each have a chemical composition with MgO as the main oxide; wherein
   the first layer has a chemical composition with a proportion of Fe₂O₃ of at most 2.8% by mass, based on the mass of the first layer; and wherein
   the second layer has a chemical composition with a proportion of Fe₂O₃ of at least 3.2% by mass, based on the mass of the second layer;
disposing the first layer on the bottom; and
disposing the second layer on the first layer.

The first layer and the second layer may be provided as disclosed herein.

In particular, the metallurgical unit may be an electric arc furnace as disclosed herein. In particular, the bottom of the metallurgical unit may be the bottom of an electric arc furnace. In particular, the bottom may be the bottom-side portion of the metal shell of an electric arc furnace, as set forth herein, on which, for example, a permanent lining in the form of a lining of refractory bricks may also be arranged.

The first layer is configured to be disposed on the bottom of the metallurgical unit. In this regard, the first layer, as disclosed herein, may particularly preferably be provided in the form of a mass, in particular in the form of a dry mass. Preferably, in this case, the first layer is provided unbound and unsintered to be disposed on the bottom. As stated above, the provision of the first layer in the form of such a mass also has, in particular, the advantage that it can be disposed on the bottom without joints, i.e., monolithically.

This first layer can be disposed on the bottom according to technologies known from the prior art. Insofar as the first layer is present as a mass, it can be disposed on the bottom in accordance with the technologies known from the prior art for arranging a mass. In particular, the first layer can be disposed on the bottom in such a way that it forms a monolithic layer. For example, suitable templates can also be used for disposing the first layer on the bottom, as known from the prior art. As known from the prior art, the first layer can be compacted after being disposed on the bottom, for example by vibrating or ramming. For example, the first layer can also be disposed on the bottom in layers in several steps.

The first layer is preferably disposed directly on the bottom of the metallurgical unit. In particular, no other layers or refractory components, such as mortar, are preferably arranged between the first layer and the bottom.

The second layer is configured to be disposed on the first layer. In this regard, the second layer, as disclosed herein, can particularly preferably be provided in the form of a mass, in particular in the form of a dry mass. Preferably, in this case, the second layer is provided unbonded and unsintered to be disposed on the first layer. As explained above, the provision of the second layer in the form of such a mass also has in particular the advantage that it can be disposed on the first layer without joints, i.e., monolithically.

This second layer can be disposed on the first layer according to technologies known from the prior art. Insofar as the second layer is present as a mass, it can be disposed on the first layer in accordance with the technologies known from the prior art for disposing a mass. In particular, the second layer can be disposed on the first layer such that it forms a monolithic layer. Suitable templates can also be used for disposing the second layer on the first layer, for example, as known from the prior art. As known from the prior art, the second layer can also be compacted after it has been applied to the first layer, for example by vibration or ramming. For example, the second layer can also be disposed in layers in several steps.

Preferably, the second layer is disposed directly on the first layer. Thus, no other layers or other components, for example other refractory materials or mortar, are present on the first layer when the second layer is disposed thereon.

Preferably, no further layer is disposed on the second layer, i.e., on the side of the second layer facing away from the first layer. To this extent, the second layer is exposed upwardly after its disposal on the first layer.

According to a further step, it may be provided that the second layer, disposed on the first layer, is sintered. In particular, as set forth herein, it may be provided that the second layer is sintered only after it is disposed on the first layer. The sintering of the second layer may be carried out, as known from the prior art, during the start-up of the metallurgical unit, i.e., in particular in the form of an electric arc furnace. In particular, the second layer may be at least partially sintered by a molten metal that forms on the first layer.

A further subject-matter of the invention is the provision of a metallurgical unit for holding a molten metal, comprising:
a bottom; and
a refractory lining; wherein
the refractory lining is disposed on the bottom and comprises:
   a first layer; and
   a second layer; wherein
   the first layer is disposed on the bottom of the metallurgical vessel; wherein
   the second layer is disposed on the first layer; wherein
   the first layer and the second layer each have a chemical composition with
MgO as the main oxide; wherein
   the first layer has a chemical composition with a proportion of Fe₂O₃ of at most 2.8% by mass, based on the mass of the first layer; and wherein
   the second layer has a chemical composition with a proportion of Fe₂O₃ of at least 3.2% by mass, based on the mass of the second layer.

As set forth herein, the metallurgical unit may preferably be an electric arc furnace. In particular, an electric arc furnace may be a furnace that heats and melts scrap, hot metal and/or direct reduced iron (DRI) by means of an electric arc. For example, the electric arc furnace may be a submerged arc furnace. Further, as set forth herein, the bottom of the metallurgical unit in particular may be designed as the bottom of an electric arc furnace known in the prior art.

The refractory lining may be configured as set forth herein.

Preferably, the refractory lining may have been disposed on the bottom of the metallurgical unit according to the invention by the method according to the invention.

Further features of the invention will be apparent from the claims, the figure and the accompanying figure description.

All features of the invention may be combined, individually or in combination, in any desired manner.

An embodiment of the invention will be explained in more detail with reference to the accompanying figure and the associated subsequent figure description.

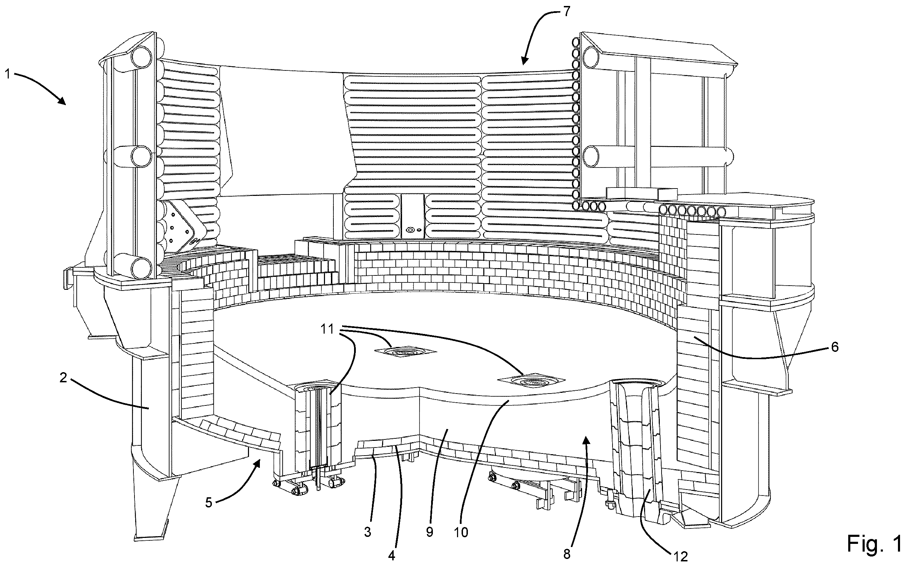

Thereby shows
- Figure 1: a schematized exemplary embodiment of a metallurgical unit according to the invention comprising an exemplary embodiment of a refractory lining according to the invention.

The exemplary embodiment according to Figure 1 shows a metallurgical unit in the form of an electric arc furnace (1), which is shown in a perspective, lateral sectional view.

The electric arc furnace (1) comprises, as known from the prior art, a metal shell (2) comprising a bottom-side section (3). A permanent lining (4) in the form of a lining of refractory bricks is arranged on the bottom-side section (3) of the metal shell (2). The section (3) with the permanent lining (4) arranged thereon together form the bottom (5) of the electric arc furnace (1). On the side wall, the lower section of the metal shell (2) is lined with a side wall wear lining (6) in the form of a brick lining made of refractory bricks. Enclosed by the electric arc furnace (1) is a furnace chamber (7) designed to hold molten metal.

In the area of the bottom (5), the electric arc furnace (1) further has the components known from the prior art, such as purging plugs (11) and a bottom tapping (12).

An embodiment of a refractory lining (8) according to the invention is disposed on the bottom (5). The refractory lining (8) comprises a first layer (9) and a second layer (10).

The first layer (9) is disposed directly on the bottom (5). The first layer (9) is in the form of a dry hearth mass monolithically disposed on the bottom (5).

The second layer (10) is disposed directly on the first layer (9) and is exposed freely at the top side thereof. The second layer (10) thus directly faces the furnace chamber (7) enclosed by the electric arc furnace (1). The second layer (10) is in the form of a dry hearth mass which is monolithically disposed on the first layer (9).

The refractory lining (8) has a thickness of 700 mm, with the second layer (10) having a thickness of 90 mm.

Both, the first layer (9) and the second layer (10), were made of refractory raw materials in the form of sintered magnesia and sintered doloma. These raw materials were selected in such qualities and proportions that the first layer (9) and the second layer (10) each had the chemical composition according to the invention, in particular the proportion of Fe₂O₃ according to the invention.

Accordingly, the first layer (9) had a chemical composition with a proportion of the following oxides in the following amounts, each based on the mass of the first layer (9):

| | |
|---|---|
| Fe₂O₃: | 2.4% by mass; |
| CaO: | 26% by mass; |
| SiO₂: | 0.7% by mass; |
| Al₂O₃: | 0.1% by mass; |
| MgO: | 70.8% by mass. |

The second layer (10) had a chemical composition with a proportion of the following oxides in the following amounts, each based on the mass of the second layer (10):

| | |
|---|---|
| Fe₂O₃: | 3.4% by mass; |
| CaO: | 23% by mass; |
| SiO₂: | 0.8% by mass; |
| Al₂O₃: | 0.4% by mass; |
| MgO: | 72.4% by mass. |

The grain distribution of the first layer (9) and the second layer (10) were as follows: 90% <8mm, 70% <3.15 mm, 55% <1mm, 20%<0.063mm (all indications in % mean "% by mass" in relation to the respective mass of the first and second layer).

In order to provide the refractory lining (8) on the bottom (5), and exemplary embodiment of the method according to the invention was performed.

Insofar, first, to dispose the first layer (9) and the second layer (10) on the bottom (5), the first layer (9) and the second layer (10) were firstly provided as dry hearth masses.

The first layer (9) was then disposed in layers on the bottom (5) according to the prior art in several steps, each layer being compacted by vibration. In particular cases, especially if the inclination of the bank exceeds 35°, a template may be used for disposing the material. After the compacting step, the first layer (9) was present as a monolithic layer on the bottom (5).

Subsequently, the second layer (10) was disposed directly on this first layer (9), being disposed monolithically on the bottom (5), also with the aid of a template in several steps if the inclination of the banks exceeds 35°, each layer also being compacted by vibration. After that, the second layer (10) was disposed as a monolithic layer on the first layer (9).

When the electric arc furnace (1) then was started up, it was found that the second layer (10) sintered tightly at an early stage due to the molten metal forming in the furnace chamber (7) and was able to prevent components of the molten metal and slag from infiltration into and passing through the refractory lining (8). Furthermore, the first layer (9) proved to be highly resistant to the molten metal, the slag and to temperature changes and exhibited good high-temperature resistance.

## Claims

1. A refractory lining (8), being configured to be disposed on the bottom (5) of a metallurgical unit (1) for holding a molten metal, the refractory lining (8) comprising:
| | |
|---|---|
| 1.1 | a first layer (9); and |
| 1.2 | second layer (10); wherein |
| 1.3 | the first layer (9) is configured to be disposed on the bottom (5) of the metallurgical unit (1); wherein |
| 1.4 | the second layer (10) is disposed on the first layer (9); wherein |
| 1.5 | the first layer (9) and the second layer (10) each have a chemical composition with MgO as the main oxide; wherein |
| 1.6 | the first layer (9) has a chemical composition with a proportion of Fe₂O₃ of at most 2.8% by mass, based on the mass of the first layer (9); and wherein |
| 1.7 | the second layer (10) has a chemical composition with a proportion of Fe₂O₃ of at least 3.2% by mass, based on the mass of the second layer (10). |

2. The refractory lining (8) according to claim 1, wherein the second layer (10) is disposed directly on the first layer (9).

3. The refractory lining (8) according to at least one of the preceding claims, wherein the first layer (9) has a chemical composition with a proportion of Fe₂O₃ in the range of 0.2 to 2.8% by mass, based on the mass of the first layer (9).

4. The refractory lining (8) according to at least one of the preceding claims, wherein the second layer (10) has a chemical composition with a proportion of Fe₂O₃ in the range of 3.2 to 8.3% by mass, based on the mass of the second layer (10).

5. The refractory lining (8) according to at least one of the preceding claims, wherein the first layer (9) and the second layer (10) each have a chemical composition with a proportion of MgO above 50% by mass, based on the respective mass of the first layer (9) and the second layer (10).

6. The refractory lining (8) according to at least one of the preceding claims, wherein the first layer (9) has a chemical composition with a proportion of the following oxides in the following ranges, each based on the mass of the first layer (9):
| | |
|---|---|
| Fe₂O₃: | 0.2 to 2.8% by mass; |
| CaO: | 0.9 to 30% by mass; |
| SiO₂: | 0.2 to 1.0% by mass; |
| Al₂O₃: | 0.05 to 0.4% by mass; |
| MgO: | remainder to 100% by mass. |

7. The refractory lining (8) according to at least one of the preceding claims, wherein the second layer (10) has a chemical composition with a proportion of the following oxides in the following ranges, each based on the mass of the second layer (10):
| | |
|---|---|
| Fe₂O₃: | 3.2 to 8.3% by mass; |
| CaO: | 15 to 46% by mass; |
| SiO₂: | 0.4 to 2.2% by mass; |
| Al₂O₃: | 0.1 to 1.0% by mass; |
| MgO: | remainder to 100% by mass. |

8. The refractory lining (8) according to at least one of the preceding claims, wherein the refractory lining (8) has a thickness in the range of 400 to 1,200 mm.

9. The refractory lining (8) according to at least one of the preceding claims, wherein the second layer (10) has a thickness in the range of 5 to 30 % of the thickness of the refractory lining (8).

10. A method of providing a refractory lining (8) disposed on the bottom (5) of a metallurgical unit (1) for holding a molten metal, the method comprising the steps of:
| | | |
|---|---|---|
| A. | providing a metallurgical unit (1) for holding a molten metal comprising: | |
| | A.1 | a bottom (5); |
| B. | providing a refractory lining (8), the refractory lining (8) comprising: | |
| | B.1 | a first layer (9); and |
| | B.2 | a second layer (10); wherein |
| | B.3 | the first layer (9) is adapted to be disposed on the bottom (5) of the metallurgical unit (1); wherein |
| | B.4 | the second layer (10) is adapted to be disposed on the first layer (9); wherein |
| | B.5 | the first layer (9) and the second layer (10) each have a chemical composition with MgO as the main oxide; wherein |
| | B.6 | the first layer (9) has a chemical composition with a proportion of Fe₂O₃ of at most 2.8% by mass, based on the mass of the first layer (9); and wherein |
| | B.7 | the second layer (10) has a chemical composition with a proportion of Fe₂O₃ of at least 3.2% by mass, based on the mass of the second layer (10); |
| C. | disposing the first layer (9) on the bottom (5); and | |
| D. | disposing the second layer (10) on the first layer (9). | |

11. The method according to claim 10, comprising the following further step:
| | |
|---|---|
| E. | sintering the second layer (10) disposed on the first layer (9). |

12. A metallurgical unit (1) for holding a molten metal, comprising:
| | | |
|---|---|---|
| 12.1 | a bottom (5); and | |
| 12.2 | a refractory lining (8); wherein | |
| | 12.2.1 | the refractory lining (8) is disposed on the bottom (5) and comprises: |
| | 12.2.2 | a first layer (9); and |
| | 12.2.3 | a second layer (10); wherein |
| | 12.2.4 | the first layer (9) is disposed on the bottom (5) of the metallurgical vessel; wherein |
| 12.2.5 | the second layer (10) is disposed on the first layer (9); wherein | |
| 12.2.6 | the first layer (9) and the second layer (10) each have a chemical composition with MgO as the main oxide; wherein | |
| 12.2.7 | the first layer (9) has a chemical composition with a proportion of Fe₂O₃ of at most 2.8% by mass, based on the mass of the first layer (9); and wherein | |
| 12.2.8 | the second layer (10) has a chemical composition with a proportion of Fe₂O₃ of at least 3.2% by mass, based on the mass of the second layer (10). | |

13. The metallurgical unit (1) of claim 12 being an electric arc furnace.

14. The metallurgical unit (1) according to at least one of claims 12 to 13 having a refractory lining (8) according to at least one of claims 2 to 9.

15. The metallurgical unit (1) according to at least one of claims 12 to 14, wherein the refractory lining (8) is disposed on the bottom (5) by a method according to at least one of claims 10 to 11.

## Patentansprüche

1. Feuerfeste Auskleidung (8), die hergerichtet ist, auf dem Boden (5) einer metallurgischen Anlage (1) zur Aufnahme von geschmolzenem Metall angeordnet zu werden, wobei die feuerfeste Auskleidung (8) umfasst:
| | |
|---|---|
| 1.1 | eine erste Schicht (9); und |
| 1.2 | eine zweite Schicht (10); wobei |
| 1.3 | die erste Schicht (9) hergerichtet ist, auf dem Boden (5) der metallurgischen Anlage (1) angeordnet zu werden; wobei |
| 1.4 | die zweite Schicht (10) auf der ersten Schicht (9) angeordnet ist; wobei |
| 1.5 | die erste Schicht (9) und die zweite Schicht (10) jeweils eine chemische Zusammensetzung mit MgO als Hauptoxid aufweisen; wobei |
| 1.6 | die erste Schicht (9) eine chemische Zusammensetzung mit einem Anteil an Fe₂O₃ von höchstens 2,8 Masse-%, bezogen auf die Masse der ersten Schicht (9), aufweist; und wobei |
| 1.7 | die zweite Schicht (10) eine chemische Zusammensetzung mit einem Anteil an Fe₂O₃ von mindestens 3,2 Masse-%, bezogen auf die Masse der zweiten Schicht (10), aufweist. |

2. Die feuerfeste Auskleidung (8) nach Anspruch 1, wobei die zweite Schicht (10) unmittelbar auf der ersten Schicht (9) angeordnet ist.

3. Die feuerfeste Auskleidung (8) nach wenigstens einem der vorhergehenden Ansprüche, wobei die erste Schicht (9) eine chemische Zusammensetzung mit einem Anteil an Fe₂O₃ im Bereich von 0,2 bis 2,8 Masse-%, bezogen auf die Masse der ersten Schicht (9), aufweist.

4. Die feuerfeste Auskleidung (8) nach wenigstens einem der vorhergehenden Ansprüche, wobei die zweite Schicht (10) eine chemische Zusammensetzung mit einem Anteil an Fe₂O₃ im Bereich von 3,2 bis 8,3 Masse-%, bezogen auf die Masse der zweiten Schicht (10), aufweist.

5. Die feuerfeste Auskleidung (8) nach wenigstens einem der vorhergehenden Ansprüche, wobei die erste Schicht (9) und die zweite Schicht (10) jeweils eine chemische Zusammensetzung mit einem Anteil an MgO von über 50 Masse-%, bezogen auf die jeweilige Masse der ersten Schicht (9) und der zweiten Schicht (10), aufweisen.

6. Die feuerfeste Auskleidung (8) nach wenigstens einem der vorhergehenden Ansprüche, wobei die erste Schicht (9) eine chemische Zusammensetzung mit einem Anteil der folgenden Oxide in den folgenden Bereichen aufweist, jeweils bezogen auf die Masse der ersten Schicht (9):
| | |
|---|---|
| Fe₂O₃: | 0,2 bis 2,8 Masse-%; |
| CaO: | 0,9 bis 30 Masse-%; |
| SiO₂: | 0,2 bis 1,0 Masse-%; |
| Al₂O₃: | 0,05 bis 0,4 Masse-%; |
| MgO: | Rest auf 100 Masse-%. |

7. Die feuerfeste Auskleidung (8) nach wenigstens einem der vorhergehenden Ansprüche, wobei die zweite Schicht (10) eine chemische Zusammensetzung mit einem Anteil der folgenden Oxide in den folgenden Bereichen aufweist, jeweils bezogen auf die Masse der zweiten Schicht (10):
| | |
|---|---|
| Fe₂O₃: | 3,2 bis 8,3 Masse-%; |
| CaO: | 15 bis 46 Masse-%; |
| SiO₂: | 0,4 bis 2,2 Masse-%; |
| Al₂O₃: | 0,1 bis 1,0 Masse-%; |
| MgO: | Rest auf 100 Masse-%. |

8. Die feuerfeste Auskleidung (8) nach wenigstens einem der vorhergehenden Ansprüche, wobei die feuerfeste Auskleidung (8) eine Dicke im Bereich von 400 bis 1.200 mm aufweist.

9. Die feuerfeste Auskleidung (8) nach wenigstens einem der vorhergehenden Ansprüche, wobei die zweite Schicht (10) eine Dicke im Bereich von 5 bis 30 % der Dicke der feuerfesten Auskleidung (8) aufweist.

10. Verfahren zum Bereitstellen einer feuerfesten Auskleidung (8), die auf dem Boden (5) einer metallurgischen Anlage (1) zur Aufnahme von geschmolzenem Metall angeordnet ist, wobei das Verfahren die folgenden Schritte umfasst:
| | | |
|---|---|---|
| A. | Bereitstellen einer metallurgischen Anlage (1) zur Aufnahme von geschmolzenem Metall, umfassend: | |
| | A.1 | einen Boden (5); |
| B. | Bereitstellen einer feuerfesten Auskleidung (8), wobei die feuerfeste Auskleidung (8) umfasst: | |
| | B.1 | eine erste Schicht (9); und |
| | B.2 | eine zweite Schicht (10); wobei |
| | B.3 | die erste Schicht (9) hergerichtet ist, auf dem Boden (5) der metallurgischen Anlage (1) angeordnet zu werden; wobei |
| | B.4 | die zweite Schicht (10) hergerichtet ist, auf der ersten Schicht (9) angeordnet zu werden; wobei |
| | B.5 | die erste Schicht (9) und die zweite Schicht (10) jeweils eine chemische Zusammensetzung mit MgO als Hauptoxid aufweisen; wobei |
| | B.6 | die erste Schicht (9) eine chemische Zusammensetzung mit einem Anteil an Fe₂O₃ von höchstens 2,8 Masse-%, bezogen auf die Masse der ersten Schicht (9), aufweist; und wobei |
| | B.7 | die zweite Schicht (10) eine chemische Zusammensetzung mit einem Anteil an Fe₂O₃ von mindestens 3,2 Masse-%, bezogen auf die Masse der zweiten Schicht (10), aufweist; |
| C. | Anordnen der ersten Schicht (9) auf dem Boden (5); und | |
| D. | Anordnen der zweiten Schicht (10) auf der ersten Schicht (9). | |

11. Das Verfahren nach Anspruch 10, umfassend den folgenden weiteren Schritt:
| | |
|---|---|
| E. | Sintern der auf der ersten Schicht (9) angeordneten zweiten Schicht (10). |

12. Metallurgische Anlage (1) zur Aufnahme von geschmolzenem Metall, umfassend:
| | | |
|---|---|---|
| 12.1 | einen Boden (5); und | |
| 12.2 | eine feuerfeste Auskleidung (8); wobei | |
| | 12.2.1 | die feuerfeste Auskleidung (8) auf dem Boden (5) angeordnet ist und umfasst: |
| | 12.2.2 | eine erste Schicht (9); und |
| | 12.2.3 | eine zweite Schicht (10); wobei |
| | 12.2.4 | die erste Schicht (9) auf dem Boden (5) des metallurgischen Gefäßes angeordnet ist; wobei |
| | 12.2.5 | die zweite Schicht (10) auf der ersten Schicht (9) angeordnet ist; wobei |
| | 12.2.6 | die erste Schicht (9) und die zweite Schicht (10) jeweils eine chemische Zusammensetzung mit MgO als Hauptoxid aufweisen; wobei |
| | 12.2.7 | die erste Schicht (9) eine chemische Zusammensetzung mit einem Anteil an Fe₂O₃ von höchstens 2,8 Masse-%, bezogen auf die Masse der ersten Schicht (9), aufweist; und wobei |
| | 12.2.8 | die zweite Schicht (10) eine chemische Zusammensetzung mit einem Anteil an Fe₂O₃ von mindestens 3,2 Masse-%, bezogen auf die Masse der zweiten Schicht (10), aufweist. |

13. Die metallurgische Anlage (1) nach Anspruch 12, die ein Lichtbogenofen ist.

14. Die metallurgische Anlage (1) nach wenigstens einem der Ansprüche 12 bis 13, die eine feuerfeste Auskleidung (8) nach wenigstens einem der Ansprüche 2 bis 9 aufweist.

15. Die metallurgische Anlage (1) nach wenigstens einem der Ansprüche 12 bis 14, wobei die feuerfeste Auskleidung (8) auf dem Boden (5) durch ein Verfahren nach wenigstens einem der Ansprüche 10 bis 11 angeordnet ist.

## Revendications

1. Revêtement réfractaire (8) qui est conçu pour être disposé sur le fond (5) d'une unité métallurgique (1) destinée à contenir un métal en fusion, ledit revêtement réfractaire (8) comprenant :
| | |
|---|---|
| 1.1 | une première couche (9) ; et |
| 1.2 | une seconde couche (10) ; |
| 1.3 | la première couche (9) étant conçue pour être disposée sur le fond (5) de l'unité métallurgique (1) ; |
| 1.4 | la seconde couche (10) étant disposée sur la première couche (9) ; |
| 1.5 | la première couche (9) et la seconde couche (10) étant chacune une composition chimique avec du MgO comme oxyde principal ; |
| 1.6 | la première couche (9) ayant une composition chimique avec une proportion de Fe₂O₃ d'au plus 2,8 % en masse, en se basant sur la masse de la première couche (9) ; et |
| 1.7 | la seconde couche (10) ayant une composition chimique avec une proportion de Fe₂O₃ d'au moins 3,2 % en masse, en se basant sur la masse de la seconde couche (10). |

2. Revêtement réfractaire (8) selon la revendication 1, dans lequel la seconde couche (10) est disposée directement sur la première couche (9).

3. Revêtement réfractaire (8) selon au moins une des revendications précédentes, dans lequel la première couche (9) a une composition chimique avec une proportion de Fe₂O₃ comprise dans la plage de 0,2 à 2,8 % en masse, en se basant sur la masse de la première couche (9).

4. Revêtement réfractaire (8) selon au moins une des revendications précédentes, dans lequel la seconde couche (10) a une composition chimique avec une proportion de Fe₂O₃ comprise dans la plage de 3,2 à 8,3 % en masse, en se basant sur la masse de la seconde couche (10).

5. Revêtement réfractaire (8) selon au moins une des revendications précédentes, dans lequel la première couche (9) et la seconde couche (10) ont chacune une composition chimique avec une proportion de MgO supérieure à 50 % en masse, en se basant sur la masse respective de la première couche (9) et de la seconde couche (10).

6. Revêtement réfractaire (8) selon au moins une des revendications précédentes, dans lequel la première couche (9) a une composition chimique avec une proportion des oxydes suivants dans les plages suivantes, chacune se basant sur la masse de la première couche (9) :
| | |
|---|---|
| Fe₂O₃ : | 0,2 à 2,8 % en masse ; |
| CaO : | 0,9 à 30 % en masse ; |
| SiO₂ : | 0,2 à 1,0 % en masse ; |
| Al₂O₃ : | 0,05 à 0,4 % en masse ; |
| MgO : | le reste, jusqu'à 100 % en masse. |

7. Revêtement réfractaire (8) selon au moins une des revendications précédentes, dans lequel la seconde couche (10) a une composition chimique avec une proportion des oxydes suivants dans les plages suivantes, chacune se basant sur la masse de la seconde couche (10) :
| | |
|---|---|
| Fe₂O₃ : | 3,2 à 8,3 % en masse ; |
| CaO : | 15 à 46 % en masse ; |
| SiO₂ : | 0,4 à 2,2 % en masse ; |
| Al₂O₃ : | 0,1 à 1,0 % en masse ; |
| MgO : | le reste, jusqu'à 100 % en masse. |

8. Revêtement réfractaire (8) selon au moins une des revendications précédentes, dans lequel le revêtement réfractaire (8) a une épaisseur comprise dans la plage de 400 à 1200 mm.

9. Revêtement réfractaire (8) selon au moins une des revendications précédentes, dans lequel la seconde couche (10) a une épaisseur comprise dans la plage de 5 à 30 % de l'épaisseur du revêtement réfractaire (8).

10. Procédé de fourniture d'un revêtement réfractaire (8) disposé sur le fond (5) d'une unité métallurgique (1) destinée à contenir un métal en fusion, le procédé comprenant les étapes consistant à :
| | | |
|---|---|---|
| A. | | fournir une unité métallurgique (1) destinée à contenir un métal en fusion, comprenant : |
| | A.1 | un fond (5) ; |
| B. | fournir un revêtement réfractaire (8), le revêtement réfractaire (8) comprenant : | |
| | B.1 | une première couche (9) ; et |
| | B.2 | une seconde couche (10) ; |
| | B.3 | la première couche (9) étant adaptée à être disposée sur le fond (5) de l'unité métallurgique (1) ; |
| | B.4 | la seconde couche (10) étant adaptée à être disposée sur la première couche (9) ; |
| | B.5 | la première couche (9) et la seconde couche (10) ayant chacune une composition chimique avec du MgO comme oxyde principal ; |
| | B.6 | la première couche (9) ayant une composition chimique avec une proportion de Fe₂O₃ d'au plus 2,8 % en masse, en se basant sur la masse de la première couche (9) ; et |
| | B.7 | la seconde couche (10) ayant une composition chimique avec une proportion de Fe₂O₃ d'au moins 3,2 % en masse, en se basant sur la masse de la seconde couche (10) ; |
| C | disposer la première couche (9) sur le fond (5) ; et | |
| D. | disposer la seconde couche (10) sur la première couche (9). | |

11. Procédé selon la revendication 10, comprend l'étape supplémentaire suivante :
| | |
|---|---|
| E. | fritter la seconde couche (10) disposée sur la première couche (9). |

12. Unité métallurgique (1) destinée à contenir un métal en fusion, comprenant :
| | | |
|---|---|---|
| 12.1 | un fond (5) ; et | |
| 12.2 | un revêtement réfractaire (8) ; | |
| | 12.2.1 | le revêtement réfractaire (8) étant disposé sur le fond (5) et comprenant : |
| | 12.2.2 | une première couche (9) ; et |
| | 12.2.3 | une seconde couche (10) ; |
| | 12.2.4 | la première couche (9) étant disposée sur le fond (5) du récipient métallurgique ; |
| | 12.2.5 | la seconde couche (10) étant disposée sur la première couche (9) ; |
| | 12.2.6 | la première couche (9) et la seconde couche (10) ayant chacune une composition chimique avec du MgO comme oxyde principal ; |
| | 12.2.7 | la première couche (9) ayant une composition chimique avec une proportion de Fe₂O₃ d'au plus 2,8 % en masse, en se basant sur la masse de la première couche (9) ; et |
| | 12.2.8 | la seconde couche (10) ayant une composition chimique avec une proportion de |
| Fe₂O₃ d'au moins 3,2 % en masse, en se basant sur la masse de la seconde couche (10). | | |

13. Unité métallurgique (1) selon la revendication 12 qui est un four à arc électrique.

14. Unité métallurgique (1) selon au moins une des revendications 12 à 13 ayant un revêtement réfractaire (8) selon au moins une des revendications 2 à 9.

15. Unité métallurgique (1) selon au moins une des revendications 12 à 14, dans laquelle le revêtement réfractaire (8) est disposé sur le fond (5) par un procédé selon au moins une des revendications 10 à 11.
